(19) Europäisches Patentamt

European Patent Office

Office européen des brevets

(11) EP 2 919 376 A1

(12) EUROPEAN PATENT APPLICATION

(43) Date of publication:
16.09.2015 Bulletin 2015/38

(51) Int Cl.:
$H02M\ 7/219^{(2006.01)}$ $\qquad$ $B60L\ 9/24^{(2006.01)}$

(21) Application number: 14158775.8

(22) Date of filing: 11.03.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Bombardier Transportation GmbH
10785 Berlin (DE)

(72) Inventors:
• Pendharkar, Ishan
8051 Zürich (CH)
• Vrtek, Juraj
8606 Greifensee (CH)

(74) Representative: Ramrath, Lukas et al
Patentanwälte Bressel und Partner mbB
Potsdamer Platz 10
10785 Berlin (DE)

(54) **Tranformer parameter estimation in control of 4-quadrant rail infeed converter**

(57) A method for controlling at least a first switching circuit (7a) of a power converter (6), in particular of a rail vehicle, wherein an AC terminal of the first switching circuit (7a) is electrically connected to a first feeding circuit, wherein the first feeding circuit comprises at least one inductive element, wherein at least one parameter depending on a self-inductance of the first feeding circuit and/or depending on at least one mutual-inductance of the first feeding circuit and/or depending on a resistance of the first feeding circuit is determined based on a dynamic current-voltage-model of the first feeding circuit, wherein the first switching circuit (7a) of the power converter is controlled depending on the at least one parameter.

Fig.1

**Description**

The invention relates to a method for controlling at least a first switching circuit of a power converter, a control apparatus and a circuit arrangement, in particular of a rail vehicle.

It is known to use voltage source inverters (VSI) which are switching power converters to transfer electrical energy between a DC (direct current) voltage source and an AC (alternating current)- or-DC-load in one or both directions.

In a continuous conduction mode, all voltage-controlled voltage source inverters operate in a fundamentally similar way in that an energy storage element, e.g. a transformer, an inductor coil or any other energy storage element, is used as an intermediate energy storage element. The energy transfer is affected by generating a switching sequence that produces a potential difference across the energy storage element.

The control objective is usually to regulate the output voltage or the output current of the VSI to follow a reference value. This is e.g. disclosed in L. Malesani et. al., "PWM Current Control Techniques of Voltage Source Converters - A Survey", Proc. Int. Conference on Industrial Electronics, Control and Instrumentation, 1993. The document also discloses a feedback control approach.

Further known is a model-based predictive control which is e.g. disclosed in J. Rodriguez et. al., "Predictive current control of a voltage source inverter", IEEE transactions on Industrial Electronics 54 (1), 2007.

However, in particular for high power applications, neither of the two approaches is completely satisfactory because high power inverters, e.g. with power ratings greater than 500 kW, generally operate in a synchronous mode with relatively low switching frequencies, e.g. as low as six times the fundamental frequency, in order to keep the switching losses low. However, a low switching frequency also implies that a relatively low number of control actions is possibly within one period. This generally results in a degraded performance. Furthermore, a typical high power application, e.g. for locomotive applications, has a transformer with a large number of windings (e.g. 5 to 8), that are magnetically coupled. Obtaining an accurate first principles model that is suitable for predictive control is difficult. Thus, the control margin is reduced and the controllers reach the maximum limits of operation at lower levels of energy transfer. Manufacturing tolerances in power components and aging effects in sensors further aggravate the problem.

These problems generally lead to a degraded controller performance. Degraded performance may result, for example, in excessive generation of reactive current which, in turn, needs to be additionally compensated. Additionally, the converter may fail to deliver the rated power.

DE 197 11534 A1 discloses a method for controlling a DC voltage of a rectifier. An AC terminal of the rectifier is connected to an AC voltage source via a transformer. Further, the DC voltage is provided at a DC terminal of the rectifier. The rectifier is designed as a 4-quadrant chopper and comprises at least one controllable valve per leg. A control voltage to control said controllable valve is determined depending on a voltage control with an underlaid current control and further depending on a difference between a signal proportional to a power supply voltage and a calculated transformer model voltage, wherein the transformer model voltage is calculated using updated transformer parameters. In the document, a frequency domain transformer model is considered which is updated using information obtained from a discrete fourier transform of voltages and currents at the transformer terminals. The transformer model is updated only depending on the fundamental component and effects due to harmonics are neglected. The proposed method cannot be used for modelling of transients which are e.g. caused by asymmetrical loading of different transformer windings. Further, a central aspect of the method disclosed in the document is a time-averaging of the estimated parameters. This is done in order to smooth out effects of transients and measurement errors and, in turn, can give erroneous results due to outliers and measurement noise.

It is an object of the present invention to provide a method for controlling at least a first switching circuit of a power converter, in particular of a rail vehicle, a control apparatus and an electric circuit which allow a fast and precise control of the switching circuit in stationary as well as in transient states.

It is a main idea of the present invention to use a dynamic current-voltage-model of a feeding circuit which is connected to an AC (alternating current) terminal of a switching circuit in order to determine at least one parameter, wherein the at least one switching circuit of the power converter is controlled depending on said at least one parameter.

A method for controlling at least a first switching circuit of a power converter is proposed. The power converter is in particular a power converter of a rail vehicle. For instance, the power converter can be used in order to transfer electric power to and/or from an intermediate circuit from/to a supply voltage source, e.g. provided by a catenary or a contact line. The power converter can be a voltage controlled inverter.

An AC terminal of the first switching circuit is electrically connected to a first feeding circuit, in particular to one terminal of the first feeding circuit. The first switching circuit can comprise at least one switching element, e.g. a transistor, in particular an IGBT or a MOSFET. Preferably, the first switching circuit can be provided by a switching leg, wherein the switching leg comprises a serial connection of two switching elements. The AC terminal of the first switching circuit can in this case be provided by a center tab of said serial connection.

The first feeding circuit denotes an arrangement of at least one electric element which is electrically arranged between and/or connects the aforementioned power supply voltage source and the AC terminal of the first switching circuit. This means that the first feeding circuit can comprise one or more electrical elements. In particular, the first feeding circuit can be provided by a secondary winding of a transformer. This will be explained later.

The first feeding circuit comprises at least one inductive element. It is of course possible, that the first feeding circuit additionally comprises one or more capacitive and/or resistive element(s).

The first feeding circuit can be a part or sub-circuit of an AC coupling circuit, wherein the AC coupling circuit can comprise multiple feeding circuits and, if applicable, also other sub-circuits different from the feeding circuit(s). The AC coupling circuit can denote a circuit arrangement which is electrically arranged between and/or connects the power supply voltage source and the AC terminal(s) of the power converter.

According to the invention, at least one parameter is determined based on a dynamic current voltage-model of the first feeding circuit. The dynamic current-voltage-model can allow modeling at least a time course of a first feeding circuit current and a first feeding circuit voltage. The first feeding circuit current denotes a current flowing through the first feeding circuit, i.e. between terminals of the first feeding circuit. The first feeding circuit voltage denotes a voltage which falls across terminals of the first feeding circuit.

By using the dynamic current-voltage-model, at least the first feeding circuit current and the first feeding circuit voltage can be determined with a desired precision in a transient as well as in a stationary state. In particular, the dynamic current-voltage-model allows a time-domain determination of the first feeding current and the first feeding circuit voltage.

This allows considering periodic as well as transient components in the first feeding circuit current and the first feeding circuit voltage for parameter determination.

The parameter determined based on the dynamic current-voltage-model is a parameter depending on a self-inductance of the first feeding circuit. Alternatively or in addition, the parameter depends on at least one mutual inductance of the first feeding circuit. Alternatively or in addition, the parameter depends on the resistance of the first feeding circuit. The parameter can also be additionally or alternatively be determined on a capacitance of the first feeding circuit. Alternatively or in addition, the parameter can be determined depending on at least one operating condition, e.g. a temperature and/or a load connected to the power converter. It is possible that the parameter determined based on the dynamic current-voltage-model is, i.e. equates to or conforms to, the self-inductance and/or the at least one mutual-inductance and/or the resistance and/or the capacitance of the first feeding circuit.

Alternatively, the capacitance, the self-inductance, at least one mutual-inductance and/or the resistance can be a partial parameter or partial information of the parameter to be determined. In this case, at least another parameter or information is used in order to determine the said parameter.

It is also possible that the at least one parameter is a model parameter of the dynamic current-voltage-model or depends on one or more of said model parameters.

It is of course possible to determine more than one parameter, wherein the parameters are different from each other, wherein each parameter depends on the self-inductance and/or the mutual inductance and/or the capacitance and/or the resistance of the first feeding circuit.

The first switching circuit of the power converter is controlled depending on the at least one parameter. As will be explained later, the at least one parameter can be used in order to determine at least one control parameter for controlling the switching circuit. It is, for instance, possible to control a voltage and/or current provided at at least one DC terminal of the first switching circuit depending on the at least one parameter. In particular, switching time instants of at least one switching element can be determined based on the at least one control parameter.

The use of the said dynamic current-voltage-model of at least the first feeding circuit advantageously allows a fast and accurate determination of the parameter in any operational state of the first feeding circuit, in particular in transient as well as in stationary states. This, in turn, allows a more accurate control of the first switching circuit, in particular a more accurate control of a voltage and/or current provided at the DC terminal(s) of the first switching circuit. Thus, overall control dynamics are improved while a generation of reactive power is reduced.

The at least one parameter can be determined continuously or with a predetermined, in particular high, repetition rate. Thus, the dynamic current-voltage-model is an adaptive model and changes of electric characteristics of the first feeding circuit, in particular changes in a capacitance and/or inductance and/or resistance, as well as variations of sensor parameters, wherein the sensors are used to determine an electric variable of the first feeding circuit or the AC coupling circuit, e.g. a voltage or a current, can be taken into account.

The proposed method also allows the consideration of manufacturing tolerances and aging effects of electric elements of the first switching circuit as well as of sensors for determining electric variables, e.g. a voltage and/or a current, within the first switching circuit or the AC coupling circuit. As a result, the proposed control method can automatically adapt for every individual installation which results in a higher margin for controllers and a better controller performance.

In another embodiment, the power converter comprises more than one switching circuit, wherein each switching circuit is electrically connected to a feeding circuit. It is possible that a first switching circuit is connected to a first terminal of the first feeding circuit, wherein another switching circuit is connected to a second terminal of a first feeding circuit. Alternatively, the other switching circuit can be connected to a terminal of another switching circuit.

In particular, the power converter can comprise an even number of switching circuits, wherein two switching circuits are connected to different terminals of one feeding circuit respectively. It is, however, also possible that the power converter comprises an uneven number of switching circuits.

Each switching circuit can be designed according to described embodiments of the first switching circuit. Each feeding circuit can be designed according to the described embodiments of the first feeding circuit. In particular, each feeding circuit can comprise at least one inductive element. The inductive elements of the different feeding circuits can be galvanically isolated from each other. One DC terminal of each switching circuit can be electrically connected to the same potential respectively, e.g. to a common electric line or to a common potential.

However, all different feeding circuits can be part of the same AC coupling circuit. As will be explained later, each feeding circuit can be provided by a secondary winding of a transformer. A primary winding of the transformer is therefore inductively coupled to all feeding circuits, and all feeding circuits are inductively coupled to one another. In this case, the parameter which is determined based on the dynamic current-voltage-model preferably depends, among others, on at least one mutual inductance between inductive elements of each feeding circuit.

In a preferred embodiment, the first feeding circuit is part of a transformer or provided by a transformer. In particular, the first feeding circuit can be provided by a secondary winding of the transformer. In case of multiple feeding circuits, each feeding circuit can be provided by a secondary winding of the transformer, wherein the transformer can comprise multiple secondary windings. The aforementioned dynamic current-voltage-model allows determining all currents and/or voltages of the transformer, in particular currents and/or voltages of the secondary winding(s) and the primary winding.

In this case, the previously described AC coupling circuit can be at least partially, preferably fully, provided by the transformer.

Estimation of parameters for every individual transformer winding ensures a simple, yet precise model that can be used for predictive control. In particular, effects due to asymmetrical loading, manufacturing tolerances, temperature effects, etc can be precisely compensated.

In another embodiment, an effective resistance and/or an effective inductance of the first feeding circuit is/are determined. Additionally or alternatively, an effective capacitance of the first feeding circuit can be determined. The effective resistance and/or effective inductance can each provide a parameter wherein the first switching circuit is controlled depending on said parameter(s).

An effective resistance denotes a resistance of an electric network or electric circuit between the terminals of the first feeding circuit. The said electric network comprises, in addition to the first feeding circuit, at least one other electric element, in particular one or more electric element(s) of at least one other feeding circuit and/or of at least one other sub-circuit of the AC coupling circuit, in particular of the primary winding, wherein the at least one other element is transformed to the side of the first feeding circuit. This means, that the effective resistance of the electric network between the terminals of the first feeding circuit depends on the resistance of the first feeding circuit and in addition on the resistance of other electric elements or sub-circuits. The effective resistance can be thought of as the resistance which is provided between the terminals of the first feeding circuit.

Correspondingly, an effective inductance denotes an inductance of an electric network or electric circuit between the terminals of the first feeding circuit. The effective inductance between the terminals depends on the self-inductance of the first feeding circuit and, additionally, on at least one mutual inductance in between the first feeding circuit and another electric element, in particular one or more electric element(s) of at least one other feeding circuit and/or of at least one other sub-circuit of the AC coupling circuit. The effective inductance can be thought of as the inductance in between the terminals of the first feeding circuit. Correspondingly, an effective capacitance denotes the capacitance of an electric network or an electric circuit between the terminals of a first feeding circuit.

In case that the first feeding circuit is provided by a secondary winding of a transformer, the effective resistance can depend on the resistances of the primary winding and all remaining secondary windings of the transformer which are transformed to the first feeding circuit. The effective inductance can depend on the self-inductance of the first feeding circuit and the mutual inductances between the first feeding circuit, the remaining secondary windings and the primary winding of the transformer.

If more than one feeding circuit is provided, the effective resistance and/or effective inductance of all or selected feeding circuits can be determined.

In another embodiment, an estimated first feeding circuit voltage is determined based on a dynamic current-voltage-model, wherein the at least one parameter is determined such that a deviation between the estimated first feeding circuit voltage and a measured first feeding circuit voltage is minimal.

A measured voltage denotes a voltage which is directly or indirectly determined from an output signal of at least one sensing device, e.g. of a voltage sensor. As will be explained later, the estimated first feeding circuit voltage can be estimated depending on the first feeding circuit current, a current change of the first feeding circuit current, a resistance of the first feeding circuit, a self-inductance of the first feeding circuit and mutual inductances between the first feeding circuit and other circuits. In this case, it may be necessary to determine the estimated first feeding circuit voltage also depending on circuit currents and changes of the circuit currents of the other circuits, in particular of other secondary and primary windings.

In this case, the parameter can be a variable of an optimization problem, wherein the deviation, in particular in terms of a difference or a squared difference, between the estimated first feeding circuit voltage and the measured first feeding circuit voltage is a cost function of the optimization problem. The deviation can be determined at multiple, consecutive points in time, which advantageously allows providing multiple equations for a linear system of equations which, in turn, is easily solvable.

Alternatively, an estimated first feeding circuit and an estimated other voltage is determined based on the dynamic current-voltage-model. The other voltage can be a voltage of another feeding circuit or a voltage of another sub-circuit of the AC coupling circuit, in particular a primary winding voltage of a transformer. The other voltage can denote a voltage within the aforementioned AC coupling circuit wherein the other voltage is different from the first feeding circuit voltage. In particular, the other voltage can be a voltage across another feeding circuit, e.g. across another secondary winding, or across the primary winding voltage of a transformer providing the AC coupling circuit at least partially.

The at least one parameter is determined such that a deviation between the estimated first feeding circuit voltage and the estimated other voltage is minimal. If the feeding circuits are provided as secondary windings of a transformer, known turn ratios between the primary winding and the secondary windings of the transformer can be used in order to determine the parameter. The proposed determination especially holds for the case that secondary windings have the same number of turns.

Estimation of parameters for every individual transformer winding ensures a simple, yet precise model that can be used for predictive control. In particular, effects due to asymmetrical loading, manufacturing tolerances, temperature effects, etc. can be precisely compensated.

In a preferred embodiment, a first and a second term are determined based on the dynamic current-voltage-model. The first term is a difference between an estimated first feeding circuit voltage and an estimated other voltage.

The second term is a difference between a measured first feeding circuit voltage and a measured other voltage which e.g. corresponds to or relates to the estimated other voltage. The first feeding circuit voltage and the other voltage can e.g. be determined directly or indirectly from an output signal of at least one sensing device.

The other voltage can be a voltage which can also be estimated by the dynamic current-voltage-model. In particular, the first feeding circuit voltage can be a voltage across a secondary winding of a transformer, wherein the other voltage is a voltage across a primary winding of the transformer. Alternatively, the other voltage can be a voltage across any other secondary winding of the transformer.

The at least one parameter is determined such that a deviation between the first and the second term is minimal. The difference between the estimated first feeding circuit voltage and the estimated other voltage can be determined depending on the at least one parameter, in particular depending on the previously described effective resistance and/or the effective inductance. It is, of course, possible to determine the estimated first feeding circuit voltage depending on the at least one parameter and, subsequently, the other estimated voltage depending on the at least one parameter and then the difference between the estimated first feeding circuit voltage and the estimated other voltage.

The deviation, in particular a squared difference, between the first and the second term can provide a cost function of an optimization problem, wherein the at least one parameter can be a variable of the optimization problem. The deviation can be determined at multiple, consecutive points in time, which advantageously allows providing multiple equations for a linear system of equations which, in turn, is easily solvable. Such an optimization problem can e.g. be solved by a least-squares-approach, which advantageously allows a simple an explicit determination of the at least one parameter, which can be performed using only algebra operations.

The transformer can have more than one secondary winding, wherein at least one parameter is determined for each secondary winding. In this case, the switching circuit(s) connected to each secondary winding can be controlled depending on the respective parameters.

In another preferred embodiment, a first feeding circuit current, a current change of the first feeding circuit current and a first feeding circuit voltage is measured. In particular, the current, the current change and the voltage can be determined directly or indirectly from an output signal of at least one sensing device, in particular a voltage sensor and/or a current sensor. The at least one parameter is determined depending on at least the measured first feeding circuit current, the measured current change of the first feeding circuit current and the measured first feeding circuit voltage.

In this case, the at least one parameter can be determined using measured values of currents and/or voltages within the first feeding circuit or the AC coupling circuit. It may be necessary, in particular if the first feeding circuit is part of a transformer, to additionally measure currents and voltages of other circuits, in particular of other feeding circuits and/or of a primary winding of the transformer to determine the at least one parameter.

The measured first feeding circuit current, the measured current change of the first feeding circuit current and the measured first feeding circuit voltage can denote the current, current change and/or voltage which physically occur within/at the first feeding circuit.

This advantageously allows determination of the at least one parameter based on measurements. Thus, the at least one parameter can be updated continuously or sequentially. In particular, changes of electrical characteristics of the at least first feeding circuit and/or the at least one sensing device can be considered during the determination of the at least one parameter.

Thus, in turn, the control of the first switching circuit is always based on the actual electrical properties or characteristics of the at least first feeding circuit which, in turn, improves the control quality. The proposed method can be performed in every state of operation of the first feeding circuit, and, in particular, does not need a stationary state of operation.

In a preferred embodiment, the at least one control parameter for controlling a voltage and/or a current at the DC terminal of the first switching circuit is determined depending on the at least one parameter. The at least one control parameter denotes a parameter which is used to control the voltage and/or current at the DC terminal(s) of the switching circuit. In particular, the control parameter can be a reference voltage and/or a reference current. This advantageously allows considering changes of electrical characteristics of the first feeding circuit which are reflected by changes of the at least one parameter during the control of the first switching circuit.

In another embodiment, an ideal value of the first feeding circuit voltage and/or the first feeding circuit current is determined depending on the at least one parameter. The ideal value denotes the value of the first feeding circuit voltage which is ideally provided at the AC terminal of the first switching circuit under the assumption of a correct dynamic current-voltage-model, in particular a correctly parameterized dynamic current-voltage-model.

In this case, the control of the first switching circuit in order to provide a desired voltage and/or current at the DC terminal(s) of the first switching circuit can be based on the ideal value of the first feeding circuit voltage and/or the first feeding circuit current.

In another embodiment, a desired reference voltage at or across the DC terminals of the first switching circuit is determined, wherein the ideal value for the first feeding circuit voltage and/or the first feeding circuit current is, in particular additionally, determined depending on the desired reference voltage.

Alternatively or in addition, a desired reference current at at least one DC terminal of the first switching circuit is determined, wherein the ideal value of the first feeding circuit voltage and/or the first feeding circuit current is, in particular additionally, determined depending on the desired reference current.

This advantageously allows a better, e.g. faster and more precise, control of the voltage and/or current at the DC terminal.

In another embodiment, a deviation between the desired reference voltage at the DC terminals of the first switching circuit and an actual voltage, e.g. a measured voltage, at the DC terminals is determined. Further, the desired first feeding circuit current is determined depending on said deviation, wherein the ideal value of the first feeding circuit voltage is determined depending on the desired first feeding circuit current and the at least one parameter.

In particular, the dynamic current-voltage-model can be used in order to determine the ideal voltage or potential to be provided at the AC terminal of the first switching circuit such that the desired first feeding circuit current is provided, wherein the desired first feeding circuit current can e.g. be a current which is used to reduce a deviation between the desired reference voltage at the DC terminals and the actual voltage at the DC terminals.

In particular, the control of the first switching circuit can then be based on said ideal value of the first feeding circuit voltage.

In another embodiment, switching time instants of at least one switching element of the first switching circuit are determined based on the ideal value of the first feeding circuit voltage and/or the first feeding circuit current.

Furthermore, the previously described determination of the at least one parameter can also be referred to as model identification part. Additionally, the previously described determination of the at least one control parameter can also be referred to as control determination part. The proposed method advantageously allows performing the model identification part simultaneously or sequentially to the control determination part, wherein the control determination part is based on results of the model identification part. Since the model identification allows modelling a dynamic, in particular transient and stationary, behavior of the first switching circuit, a control performance is advantageously improved.

Further proposed is a control apparatus for controlling at least a first switching circuit of a power converter, in particular of a rail vehicle. An AC terminal of the first switching circuit is connected to a first feeding circuit, in particular to one terminal of the first feeding circuit. The first feeding circuit comprises at least one inductive element.

According to the invention a parameter depending on the self-inductance of the first feeding circuit and/or depending on at least one mutual inductance of the first feeding circuit and/or depending on a resistance of the first feeding circuit is determinable by the control apparatus, in particular by a control unit of the control apparatus, based on a dynamic current-voltage-model of the first feeding circuit. Additionally or alternatively, the parameter can be determined depending on the capacitance of the first feeding circuit. The first switching circuit of the power converter is controllable by the control apparatus depending on the at least one parameter.

The control apparatus can in particular comprise a control unit, wherein the at least one parameter is determi-

EP 2 919 376 A1

nable by the control unit based on the dynamic current-voltage-model.

Thus, the proposed control apparatus is designed such that a method according to one of the previously described embodiments can be performed using control apparatus.

Moreover, the proposed control apparatus can comprise at least one means for determining a first feeding circuit current, at least one means for determining a current change of the feeding circuit current and/or at least one means for determining a first feeding circuit voltage. The at least one means can in particular be designed as a sensing device, in particular as a voltage sensor and/or current sensor.

Thus, a control apparatus is advantageously proposed which allows performing a method according to one of the previously described embodiments.

Further proposed is a circuit arrangement, wherein the circuit arrangement comprises at least a first switching circuit of a power converter, in particular of a rail vehicle. Further, the circuit arrangement comprises a first feeding circuit, wherein an AC terminal of the first switching circuit is electrically connected to a first feeding circuit, in particular to a terminal of the first feeding circuit. The first feeding circuit comprises at least one inductive element.

According to the invention the circuit arrangement comprises at least one control apparatus according to the previously described embodiment.

In another embodiment, the circuit arrangement comprises a transformer, wherein the first feeding circuit provides a part of the transformer, in particular a secondary winding of the transformer.

The invention will be described with reference to the attached figures.

The figures show:

Fig. 1     a schematic circuit diagram of a proposed circuit arrangement and
Fig. 2     a schematic block diagram of a model identification and control determination part.

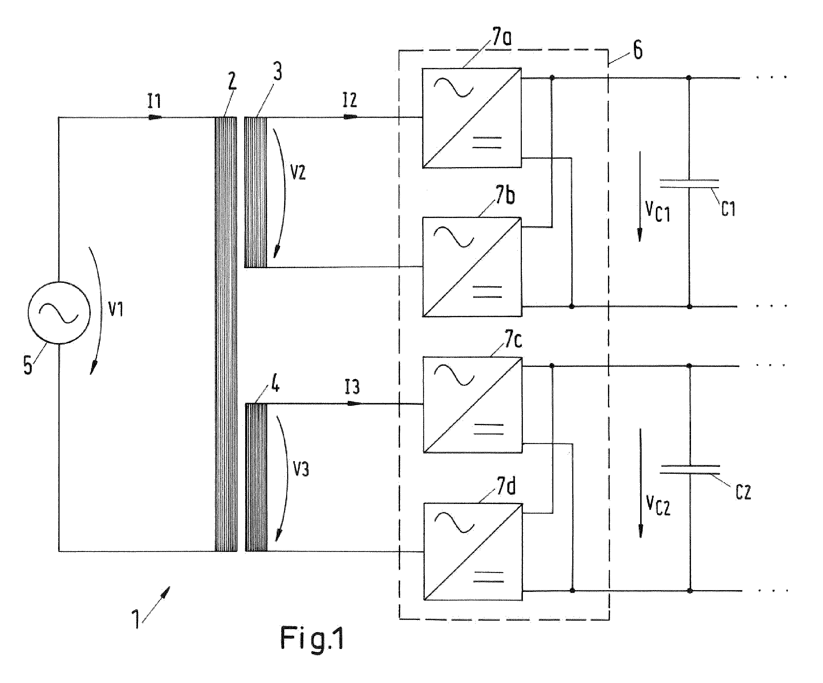

Fig. 1 shows a schematic circuit diagram of an electric circuit arrangement 1 which comprises a transformer consisting of a primary winding 2, a first secondary winding 3 and a second secondary winding 4. The primary winding 2 is electrically connected to an AC supply voltage source 5 which provides a supply voltage. The supply voltage source 5 can e.g. be provided by a catenary. Further shown is a primary winding current 11. The supply voltage corresponds to a primary winding voltage V1.

The transformer provides an AC coupling circuit which is electrically arranged between and connects the power supply voltage source 5 and a power converter 6. The power converter 6 comprises a first switching circuit 7a, a second switching circuit 7b, a third switching circuit 7c and a fourth switching circuit 7d. A first terminal of the first secondary winding 3 is electrically connected to an AC terminal of the first switching circuit 7a. A second terminal of the first secondary winding 3 is connected to an AC terminal of the second switching circuit 7b.

First DC terminals of the first and the second switching circuits 7a, 7b can be referred to as high potential terminals and are connected to a common high potential phase line. Second DC terminals of the first and the second switching circuits 7a, 7b can be referred to as low potential terminals and are connected to a common low potential phase line. This means that corresponding DC terminals, e.g. corresponding high potential terminals or corresponding low potential terminals, are connected in parallel. A first capacitor C1 of an intermediate circuit of the power converter 6 can be arranged in between the high potential phase line and the low potential phase line.

Further shown are a first secondary winding current I2 and a first secondary winding voltage V2. The first secondary winding voltage V2 falls across the AC terminals of the first and the second switching circuit 7a, 7b.

The first secondary winding 3 provides a first feeding circuit, wherein the first feeding circuit comprises at least one inductive element, in particular the secondary winding, and is connected to an AC terminal of the first switching circuit 7a.

In an analogue way, AC terminals of the third and the fourth switching circuit 7c, 7d are connected to a first and a second terminal of a second secondary winding 4, respectively. In particular, a first terminal of the second secondary winding 4 is connected to the AC terminal of the third switching circuit 7c and a second terminal of the second secondary winding 4 is connected to the AC terminal of the fourth switching circuit 7d.

Further shown are a second secondary winding current I3 and a second secondary winding voltage V3. First DC terminals of the third and fourth switching circuit 7c, 7d are connected to another high potential phase line and second DC terminals are connected to another low potential phase line. A second capacitor C2, which can e.g. be a capacitor of another intermediate circuit of a power converter 6, is arranged between the first and the second other phase line.

Further shown are intermediate circuit voltages $V_{C1}$, $V_{C2}$, which fall across the capacitors C1, C2 and thus, correspond to voltages provided between the DC terminals of the first and the second switching circuit 7a, 7b and the third and fourth switching circuit 7c, 7d respectively.

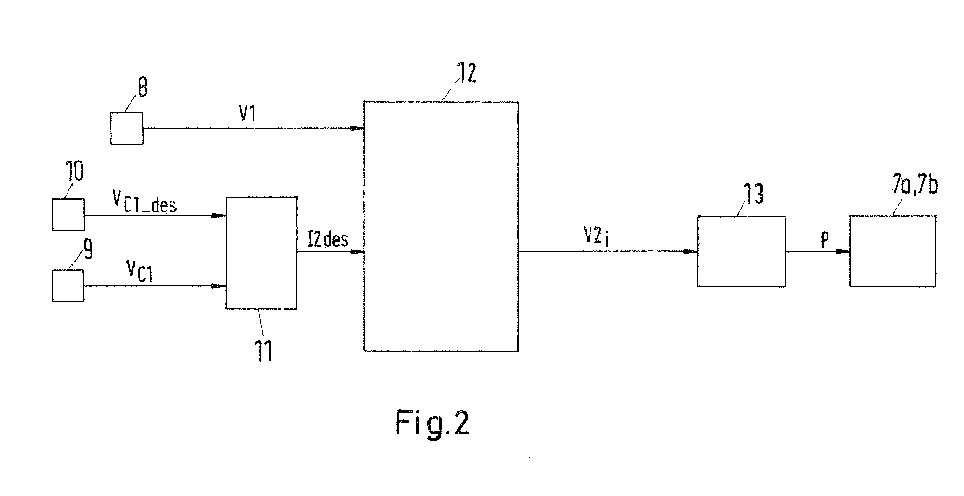

Fig. 2 shows a schematic block diagram of the proposed arrangement. Shown is a first voltage sensor 8 for sensing the primary winding voltage V1. Further shown is a second voltage sensor 9 for sensing the intermediate circuit voltage $V_{C1}$ falling across the DC terminals of the first and second switching circuit 7a, 7b. Further shown is a control

7

unit 10 which provides a reference value $V_{C1\_des}$ of the intermediate circuit voltage $V_{C1}$.

A second control unit 11 determines a desired value $I2_{des}$ of the first secondary winding current I2, wherein the desired value $I2_{des}$ is determined such that deviation between the reference value $V_{C1\_des}$ and the measured intermediate circuit voltage $V_{C1}$ is minimized, e.g. driven to 0. The desired value $I2_{des}$ is provided to a third control unit 12.

Further, the primary winding voltage V1 is provided to the third control unit 12. Depending on the primary winding voltage V1, the desired first secondary winding current $I2_{des}$ and a current change of the first secondary winding current $I2_{des}$ and additionally depending on an effective resistance R[] and an effective inductance L[] of the first secondary winding 3, the third control unit 12 determines an ideal first secondary winding voltage $V2_i$.

Depending on said ideal first secondary winding voltage $V2_i$, a pulse width modulation unit 13 determines pulses P, e.g. switching time instants of the switching elements of the first and the second switching circuits 7a, 7b. Thus, the switching elements of the first and the second switching circuit 7a, 7b are controlled such that the voltage provided between the DC terminals the first and the second switching circuit 7a, 7b is driven towards the desired reference value $V_{C1\_des}$.

The third control unit 12 determines the aforementioned effective inductance L[] and the effective resistance R[] of the first secondary winding 3 by using a dynamic current-voltage-model of the transformer.

Such a dynamic current-voltage-model of the transformer can be expressed as

$$Vi = Ii \times Ri + Li \times dIi/dt + \sum\nolimits_{k=1,\ k \neq i}^{n} (m_{ik} \times dIk/dt) \text{ for } i = 1, \ldots, n \qquad \text{formula 1,}$$

wherein Vi is an estimated winding voltage of the i-th winding, Ii is the winding current of the i-th winding, Ri is the winding resistance of the i-th winding, Li is a self-inductance of the i-th winding, $m_{ik}$ is a magnetic coupling coefficient, i.e. a mutual inductance, between the i-th winding and the k-th winding, Ik is a winding current of the k-th winding and n denotes the number of primary and secondary windings, in this case 3. Using formula 1, estimated winding voltages V1, V2, V3 of the primary winding 2, the first secondary winding 3 and the second secondary winding 4 can be estimated.

If the winding voltages V1, V2, V3 are additionally measured, e.g. using a voltage sensor, a deviation can be determined as

$$e_i = Vi - Vi_m = (Ii \times Ri + Li \times dIi/dt + \sum\nolimits_{k=1,\ k \neq i}^{n} (m_{ik} \times dIk/dt)) - Vi_m \qquad \text{formula 2}$$

wherein $Vi_m$ is the measured winding voltage of the i-th winding. The parameters Ri, Li, $m_{ik}$ can be determined e.g. if the deviation in formula 2 is squared and the parameters Ri, Li, $m_{ik}$ are determined such that the squared deviation $e_i$ is minimized for a predetermined time interval. For instance, the winding voltages $Vi_m$ can be measured at a predetermined number of sampling instances during a predetermined time interval.

Then, for each time instant, the squared error $e_i$ according to formula 1 can be determined, wherein the parameters Ri, Li, $m_{ik}$ can be determined such that the sum of squared errors $e_i$ of all time instances is minimal.

This optimization problem can be further simplified. If a turn ratio of the number of turns of the primary winding 2 and the first secondary winding 3 as well as a turn ratio of the number of turns of the primary winding 2 and the second secondary winding 4 is known, a difference between the estimated primary winding voltage V1 and the estimated first secondary winding voltage V2 can be determined as

$$
\begin{aligned}
V1 - V2 = &[(R1 \times k2 - R2) \times I2] + \\
&[L1 \times k2 - L2 + (1 - k2) \times m_{12} + k2/k3 \times (m_{13} - m_{23})] \times dI2/dt = \\
&R[] \times I2 + L[] \times dI2/dt \qquad \text{formula 3}
\end{aligned}
$$

wherein k2 is the turn ratio between the number of turns of the primary winding 2 and the number of turns of the first secondary winding 3 and k3 is the turn ratio between the number of turns of the primary winding 2 and the second secondary winding 4. This advantageously allows determining the parameters R1, R2, L1, L2, $m_{12}$, $m_{13}$, $m_{23}$ depending

on a single equation, which simplifies the determination of said parameters.

R[] represents the aforementioned effective resistance and equals to $[(R_1 \times k_2 - R_2)]$. L[] represents an effective inductance and equals to L1 x k2 - L2 + (1 - k2) x $m_{12}$ + k2/k3 x ($m_{13}$ - $m_{23}$). The term R[] represents the resistance of the transformer as seen from the first secondary winding 3. Correspondingly, the term L[] represents the inductance of the transformer as seen from the first secondary winding 3. A deviation between the first and the second measured winding voltage $V1_m$, $V2_m$ can now be expressed as

$$e = V1_m - V2_m - (R[] \times I2 + L[] \times dI2/dt) \qquad \text{formula 4.}$$

If a measured value of one or both winding voltages $V1_m$, $V2_m$ is not available, a reference value of said winding voltages V1, V2, in particular the ideal value of the first secondary winding voltage $V2_i$ which are, for example, determined by a control unit, can be used to determine the deviation.

As explained with reference to formula 2, the parameters R[], L[] can be determined by minimizing the squared error e over a predetermined time interval.

It is further possible to discretize the optimization problem. The expression of formula 4 can be provided in discrete form by

$$V1_{m,t} - V2_{m,t} = R[] \times I2_{m,t} + L[] \times d\,I2_{m,t}/dt \qquad \text{formula 5,}$$

wherein R[] und L[] are the predetermined effective resistance and effective inductance and d $I2_{m,t}$/dt is equal to

$$d\,I2_{m,t}/dt = (I2_{m,t-1} - I2_{m,t+1})/(2 \times \Delta t) \qquad \text{formula 6.}$$

$Vi_{m,t}$ is the measured winding voltage at the i-th winding at the time instant t, $Ii_{m,t}$ is the measured winding current through the i-th winding at the time instant t and $\Delta t$ is a sampling rate. If the winding voltages $V1_{m,t}$, $V2_{m,t}$ in formula 5 and the winding current $I2_{m,t}$ of the first secondary winding 3 are determined at multiple sampling time instants t, a set of linear equations can be provided, wherein the parameters R[], L[] can be determined as a solution of the set of linear equations. The solution of the set of linear equations can e.g. be determined by a least-squares-approach.

Once the parameters R[], L[] are determined by using the dynamic current-voltage-model, the same dynamic current-voltage-model can be used to determine the ideal first secondary winding voltage $V2_i$. If the primary winding voltage $V1_m$ and the first secondary winding current $I2_m$ is measured and a current change of the first secondary winding current dI2/dt is determined, e.g. by formula 6, the ideal first secondary winding voltage $V2_i$ can be determined as

$$V2_i = V1_m - (R[] \times I2_m + L[] \times dI2_m/dt) \qquad \text{formula 7.}$$

As seen in Fig. 2, this ideal first secondary winding voltage $V2_i$ can be used to determine the pulses of the first and the second switching circuit 7a, 7b, e.g. in form of switching time instants of the switching elements.

## Claims

1. A method for controlling at least a first switching circuit (7a) of a power converter (6), in particular of a rail vehicle, wherein an AC terminal of the first switching circuit (7a) is electrically connected to a first feeding circuit, wherein the first feeding circuit comprises at least one inductive element,
   **characterized in that**
   at least one parameter depending on a self-inductance of the first feeding circuit and/or depending on at least one mutual-inductance of the first feeding circuit and/or depending on a resistance of the first feeding circuit is determined based on a dynamic current-voltage-model of the first feeding circuit, wherein the first switching circuit (7a) of the power converter (6) is controlled depending on the at least one parameter.

2. The method according to claim 1, **characterized in that** the power converter (6) comprises more than one switching circuit (7a, 7b, 7c, 7d), wherein each switching circuit (7a, 7b, 7c, 7d) is electrically connected to a feeding circuit.

3. The method according to claim 1 or 2, **characterized in that** the first feeding circuit is part of a transformer or provided by a transformer.

4. The method according to one of the claims 1 to 3, **characterized in that** an effective resistance and/or an effective inductance of the first feeding circuit is determined.

5. The method according to one of the claims 1 to 4, **characterized in that** an estimated first feeding circuit voltage is determined based on the dynamic current-voltage model, wherein the at least one parameter is determined such that a deviation between the estimated first feeding circuit voltage and a measured first feeding circuit voltage is minimal.

6. The method according to one of the claims 1 to 4, **characterized in that** a first and a second term is determined based on the dynamic current-voltage model, wherein the first term is a difference between an estimated first feeding circuit voltage and an estimated other voltage, wherein the second term is a difference between a measured first feeding circuit voltage and a measured other voltage, wherein the at least one parameter is determined such that a deviation between the first and the second term is minimal.

7. The method according to one of the claims 1 to 6, **characterized in that** at least a first feeding circuit current, a current change of the first feeding circuit current and a first feeding circuit voltage is measured, wherein the at least one parameter is determined depending at least on the measured first feeding circuit current, the measured current change of the first feeding circuit current and the measured first feeding circuit voltage.

8. The method according to one of the claims 1 to 7, **characterized in that** at least one control parameter for controlling a voltage ($V_{C1}$) and/or a current at the DC terminal(s) of the first switching circuit (7a) is determined depending on the at least one parameter.

9. The method according to claim 8, **characterized in that** an ideal value of the first feeding circuit voltage and/or the first feeding circuit current is determined depending on the at least one parameter.

10. The method according to claim 9, **characterized in that** a desired reference voltage ($V_{C1\_des}$) at the DC terminal(s) of the first switching circuit (7a) is determined, wherein the ideal value of the first feeding circuit voltage and/or the first feeding circuit current is determined depending on the desired reference voltage ($V_{C1\_des}$) and/or a desired reference current at at least one DC terminal of the first switching circuit (7a) is determined, wherein the ideal value of the first feeding circuit voltage and/or the first feeding circuit current is determined depending on the desired reference current.

11. The method according to claim 10, **characterized in that** a deviation between the desired reference voltage ($V_{C1-des}$) at the DC terminal(s) of the first switching circuit (7a) and an actual voltage ($V_{C1}$) at the DC terminal(s) is determined, wherein a desired first feeding circuit current is determined depending on the deviation, wherein the ideal value of the first feeding circuit voltage is determined depending on the desired first feeding circuit current and the at least one parameter.

12. The method according to one of the claims 9 to 11, **characterized in that** switching time instants of at least one switching element of the first switching circuit (7a) are determined based on the ideal value of the first feeding circuit voltage and/or the first feeding circuit current.

13. A control apparatus for controlling at least a first switching circuit (7a) of a power converter (6), in particular of a rail vehicle, wherein an AC terminal of the first switching circuit (7a) is electrically connected to a first feeding circuit, wherein the first feeding circuit comprises at least one inductive element,
**characterized in that**
at least one parameter depending on a self-inductance of the first feeding circuit and/or depending on at least one mutual-inductance of the first feeding circuit and/or depending on a resistance of the first feeding circuit is determinable by the control apparatus based on a dynamic current-voltage-model of the first feeding circuit, wherein the first switching circuit (7a) of the power converter (6) is controllable by the control apparatus depending on the at least one parameter.

14. A circuit arrangement, wherein the circuit arrangement comprises at least a first switching circuit (7a) of a power converter (6), in particular of a rail vehicle, and a first feeding circuit, wherein an AC terminal of the first switching circuit (7a) is electrically connected to a first feeding circuit, wherein the first feeding circuit comprises at least one inductive element,

**characterized in that** the

circuit arrangement comprises at least one control apparatus according to claim 13.

15. The circuit arrangement according to claim 14, **characterized in that** the circuit arrangement comprises a transformer, wherein the first feeding circuit provides a part of the transformer.

Fig.1

Fig.2

Europäisches
Patentamt

European
Patent Office

Office européen
des brevets

# EUROPEAN SEARCH REPORT

**Application Number**

EP 14 15 8775

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HWAN-JIN JUNG ET AL: "Real-time estimation of the boost inductance for traction PWM converters", INDUSTRIAL ELECTRONICS, 2009. ISIE 2009. IEEE INTERNATIONAL SYMPOSIUM ON, IEEE, PISCATAWAY, NJ, USA, 5 July 2009 (2009-07-05), pages 499-504, XP031518560, DOI: 10.1109/ISIE.2009.5213931 ISBN: 978-1-4244-4347-5 * abstract; figures 1-7 * * Sections I - IV * | 1-15 | INV. H02M7/219 B60L9/24 |
| X | JOAQUÃN GONZÃ LEZ NORNIELLA ET AL: "Analytic and Iterative Algorithms for Online Estimation of Coupling Inductance in Direct Power Control of Three-Phase Active Rectifiers", IEEE TRANSACTIONS ON POWER ELECTRONICS, INSTITUTE OF ELECTRICAL AND ELECTRONICS ENGINEERS, USA, vol. 26, no. 11, 1 November 2011 (2011-11-01), pages 3298-3307, XP011369851, ISSN: 0885-8993, DOI: 10.1109/TPEL.2011.2142196 * figure 1 * * Section III * | 1-4,8, 13-15 | |
| | | | TECHNICAL FIELDS SEARCHED (IPC) |
| | | | H02M B60L |

The present search report has been drawn up for all claims

| Place of search | Date of completion of the search | Examiner |
|---|---|---|
| The Hague | 10 September 2014 | Kail, Maximilian |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19711534 A1

### Non-patent literature cited in the description

- **L. MALESANI.** PWM Current Control Techniques of Voltage Source Converters - A Survey. *Proc. Int. Conference on Industrial Electronics, Control and Instrumentation,* 1993

- **J. RODRIGUEZ.** Predictive current control of a voltage source inverter. *IEEE transactions on Industrial Electronics,* 2007, vol. 54 (1